Europäisches Patentamt

European Patent Office

Office européen des brevets

(11) Publication number: **0 550 790 A2**

# EUROPEAN PATENT APPLICATION

(21) Application number: **92109014.8**

(22) Date of filing: **29.05.92**

(51) Int. Cl.5: **F23G 5/02**

(30) Priority: **07.01.92 IT MI920008**

(43) Date of publication of application:
**14.07.93 Bulletin 93/28**

(84) Designated Contracting States:
**AT BE CH DE DK ES FR GB GR LI LU MC NL PT SE**

(71) Applicant: **ANSALDO INDUSTRIA S.p.A.**
**Via Pieragostini, 50**
**I-16151 Genova(IT)**

(72) Inventor: **Arecco, Giovanni**
**Via Giulio Verne 1A/9**
**I-15067 Novi Ligure, Alessandria(IT)**
Inventor: **Tiberi, Mauro**
**Salita Campasso San Nicola 72**
**I-16153 Genova(IT)**

(74) Representative: **Maggioni, Claudio et al**
**Jacobacci-Casetta & Perani Via Visconti di Modrone, 7**
**I-20122 Milano (IT)**

(54) **A method for pretreating sludge of petroleum origin in readiness for destruction in an incinerator, and a system for implementing the method.**

(57) A method and a system for pretreating sludge of petroleum origin which includes solid aggregates (25), organics and water, to separate a product which can be disposed of in an incinerator, wherein the sludge (2) is fluidized by heating it to a temperature in the 70 to 90 centigrade degrees range and keeping it in a stirred state, and the solid matter (25) is separated from the sludge (2) and scrubbed in countercurrent until the water content drops to a proportion of 20% or less of its weight.

Among the advantages afforded is a reduction of the risk of thermal shock to the incinerator burning furnace.

Rank Xerox (UK) Business Services
(3.10/3.6/3.3.1)

This invention relates to a method for pretreating sludge of petroleum origin, which sludge includes solid aggregates, organics, and water, in order to separate a product which can be disposed of in an incinerator.

The invention is also concerned with a system for implementing the method.

As is known, sludge collected, for example, from the cleaning of deep tanks of tanker ships presents itself in the form of a bituminous mass which is usually non-flowable at room temperature. This is customarily stored in standard capacity drums or bags of about 30 kilograms each.

This sludge is apt to contain solids of various description, such as bolts, glass bottles, wood splinters, mitts and cast off overalls. In addition, it would usually be floating over a seawater layer left over from the ship water ballast.

While having a composition which may fluctuate within broad limits, sludge of the kind to which this invention is directed is illustratively assumed to have the following reference composition;

| Organics | 29% |
| Water | 31% |
| Aggregates | 40%. |

The thermal destruction of this sludge poses some serious difficulties on account of the widely varying character of its components, and the high viscosity of the material making its transport impractical.

It is the object of this invention to have sludge of the above-specified kind pretreated into a material having suitable chemiophysical characteristics for proper disposal in an incinerator.

This object is achieved by the sludge pretreating method as previously indicated being characterized in that it consists of fluidizing the sludge, separating solid aggregates from the fluidized sludge, and scouring the solid matter.

This method will achieve the effects of;

a) lowering the soluble salt content of the sludge, which salts would otherwise cause corrosion problems with the refractory of the incinerator burning furnace and ash melting problems;

b) eliminating large size solids apt to obstruct plant transport augers;

c) lowering the organics content of the sludge, thereby increasing the flow rate acceptable by the incinerator and accordingly improving the throughput thereof; and

d) reducing the amount of water to a by-weight level of 20% or lower in the separated solid aggregate to be fed into the incinerator, thereby attenuating the thermal shock on the burning furnace.

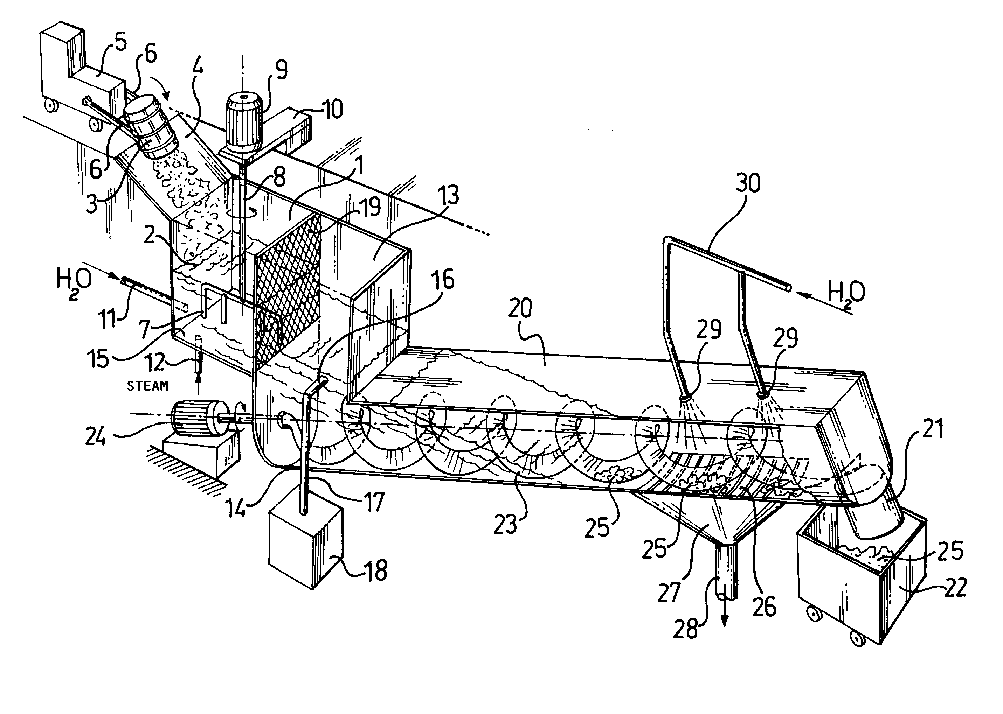

The invention will now be further described with reference to an exemplary system for implementing the method, shown schematically by way of illustration and not of limitation in the single figure of the accompanying drawing.

With reference to the drawing, indicated at 1 is a first processing vat whereinto sludge, which may be contained, for example, in standard drums or barrels 3, is loaded through a chute 4 set at an inclination angle to minimize splashing.

The drums 3 would be handled, for example, by means of a conventional vehicle 5 equipped with tongs 6. A stirrer 7 is placed inside the vat 1 and is carried by a vertical shaft 8 which is driven by a gear motor 9 supported on a bracket 10.

With the bulk of the sludge kept in gentle motion by the stirrer 7, heated water at a temperature in the 70 to 90 centigrade degrees range and steam are admitted into the vat 1 through respective conduits 11 and 12.

The vat 1 is sided by a second processing vat, indicated at 13, whose bottom 14 locates at a lower level than the bottom 15 of vat 1. A drain outlet 16 is placed a predetermined height above the bottom 14 and is connected, by a pipe 17, to a vessel 18 arranged to continuously collect the oily phase floating in the vat 13.

The above two vats are separated, along contiguous portions thereof, by a grated wall 19 effective to hold back any lumped solids present in the fluidized sludge, thus preventing them from passing into the vat 13.

The bottom 14 of vat 13 is placed in direct communication with the start of an upward sloping channel 20 whose remote end from the vat 13 is provided with a discharge outlet 21, whereunder a pick-up car 22 would be positioned.

Inside the channel 20, an auger 23, which in the example shown is an open design with no center shaft, is driven rotatively by a gear motor 24.

This auger functions as a transport means for the solid aggregate 25 that collects at the bottom of the vat 13 to lift it up to the outlet 21, whence it is discharged into the pick-up car 16.

The bottom of the channel 20 may include, as in the example shown in the drawing, a grated section 26 with a collecting hopper 27 arranged underneath which has a discharge outlet 28.

The channel 29 is provided, at the location of the grated section 26, with delivery nozzles 29 for a scouring liquid, usually water, which is fed to the nozzles over lines 30. This scouring liquid, by acting preferably over a section of the channel 20 where the solid matter being transported by the auger 23 has already left the fluidized sludge contained in the second processing vat 13, is effective to backwash such matter and promote release of the oily phase being dumped into the second vat 13 in a downward flowing stream counter to the solid matter movement.

Preferably, the contact time of the scouring liquid with the solid matter in the channel 20 is on the order of 10 minutes. Accordingly, the length of the auger 23 and its rotational speed will represent useful operational parameters to set the above time condition.

The material 25 which collects in the car 22 at the end of the process contains about 20% water, 5% organics, and 75% aggregates. This is ultimately taken to the incinerator, not shown, where it can be destructed thermally with no particular problems from shock of the refractory, by virtue also of its reduced water content.

The dimensions and materials used in the construction may be any ones contingent on individual demands, without this constituting departure from the invention scope as set forth in the foregoing description and claimed in the appended claims.

**Claims**

1. A method for pretreating sludge (2) of petroleum origin, which sludge includes solid aggregates (25), organics, and water, in order to separate a product which can be disposed of in an incinerator, characterized in that it consists of fluidizing the sludge (2), separating solid aggregates (25) from the fluidized sludge, and scouring the solid matter (25).

2. A method according to Claim 1, charaterized in that the sludge (2) fluidizing step is carried out at a temperature in the 70 to 90 centigrade degrees range.

3. A method according to Claims 1 and 2, characterized in that the sludge (2) fluidizing step is carried out while keeping the sludge (2) in a stirred state.

4. A method according to Claims 1 to 3, characterized in that the sludge (2) fluidizing step is carried out by flowing water and steam through the bulk of the sludge (2).

5. A method according to Claims 1 to 4, characterized in that separation of the solid aggregates (25) from the fluidized sludge (2) is maintained until the water content drops to a by-weight proportion of about 20% of the separated solid aggregates (25) and organics.

6. A method according to Claims 1 to 5, characterized in that said scouring step is carried out on the solid aggregates (25) with water flown in countercurrent to the movement of the solid aggregates (25).

7. A method according to Claim 6, characterized in that the water used for the countercurrent scouring step is heated to a temperature in the 70 to 90 centigrade degrees range.

8. A system for pretreating sludge (2) of petroleum origin, implementing the method as claimed in Claims 1 to 7, characterized in that it comprises a first vat (1) whereinto sludge (2) is loaded, a second vat (13) in liquid communication with the first (1), a partitioning grate (19) disposed in the connecting region between the first (1) and the second (13) vats, the bottom (14) of said second vat (13) being disposed at a lower level than that of the first vat (1), thereby the fluidized sludge (2) is allowed to flow down by gravity, a conduit (20) sloping upwards from the bottom (14) of said second vat (13), and a transport means (23) acting within said upward sloping conduit (20) to move the material toward one end of the latter provided with a discharge outlet (21).

9. A system according to Claim 8, characterized in that said first vat (1) includes a power driven stirrer (7,8,9).

**10.** A system according to Claims 8 and 9, characterized in that said second vat (13) has an overflow opening (16) placed a predetermined level above its bottom (14) to continuously drain off sludge liquid phase present in said second vat.

**11.** A system according to Claim 8, characterized in that said material transport means is an auger (23).

**12.** A system according to Claims 8 to 11, characterized in that said upward sloping conduit (20) from the bottom (14) of said second vat (13) includes liquid delivery means (29,30) for countercurrently scrubbing the material (25) being transported by said transport means (23).

**13.** A system according to Claims 8 to 12, characterized in that said upward sloping conduit (20) from the bottom of said second vat (13) includes, proximate to the discharge outlet (21), a grated wall region (26) for the downflow of scrubbing liquid by gravity underlaid by a collecting and flow re-directing hopper (27).